(19) **Europäisches Patentamt / European Patent Office / Office européen des brevets**

(11) **EP 2 396 950 B1**

(12) **FASCICULE DE BREVET EUROPEEN**

(45) Date de publication et mention de la délivrance du brevet:
**17.09.2014 Bulletin 2014/38**

(21) Numéro de dépôt: **10708311.5**

(22) Date de dépôt: **09.02.2010**

(51) Int Cl.:
*H04L 29/06* (2006.01)   *H04L 29/14* (2006.01)

(86) Numéro de dépôt international:
**PCT/FR2010/050211**

(87) Numéro de publication internationale:
**WO 2010/092292 (19.08.2010 Gazette 2010/33)**

(54) **PROCEDE ET SYSTEME DE GESTION DE LA SIGNALISATION DANS UN RESEAU DE TELECOMMUNICATIONS**

VERFAHREN UND SYSTEM ZUR SIGNALISIERUNGSVERWALTUNG IN EINEM TELEKOMMUNIKATIONSNETZ

METHOD AND SYSTEM FOR MANAGING SIGNALLING IN A TELECOMMUNICATION NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.02.2009 FR 0950994**

(43) Date de publication de la demande:
**21.12.2011 Bulletin 2011/51**

(73) Titulaire: **Orange**
**75015 Paris (FR)**

(72) Inventeurs:
• **LE ROUZIC, Jean-Claude**
**F-22560 Trebeurden (FR)**
• **TUFFIN, Stéphane**
**F-22300 Rospez (FR)**

(56) Documents cités:
**EP-A- 1 914 937     WO-A-2008/085010**
**US-A1- 2008 108 348     US-A1- 2008 182 575**

EP 2 396 950 B1

## EP 2 396 950 B1

**Description**

La présente invention concerne les moyens mis en place dans un réseau de télécommunications en prévision d'une panne partielle ou globale du réseau. Elle concerne notamment (mais pas exclusivement) les réseaux, par exemple de type IP (*"Internet Protoco"*), aptes à mettre en oeuvre des protocoles évolués de contrôle de session tels que H.323 ou SIP (*"Session Initiation Protocol"*).

Les réseaux IP permettent la diffusion de données conversationnelles ("Voix sur IP", "Partage de Contenu", "Présence", "Messagerie Instantanée", et ainsi de suite).

Comme expliqué dans l'encyclopédie en ligne "Wikipédia", le sigle "H.323 regroupe un ensemble de protocoles de communication de la voix, de l'image et de données sur IP". Ces protocoles ont été mis au point par l'UIT-T. Ces protocoles "peuvent être regroupés en trois catégories : la signalisation, la négociation de codec [codeur-décodeur], et le transport de l'information."

Le protocole SIP a été défini par l'IETF dans le document RFC 3261. Ce protocole permet l'établissement, la modification et la terminaison de sessions multimédia dans un réseau utilisant le protocole IP. Le protocole SIP permet également des procédures de notification d'événements et l'envoi d'informations en dehors du contexte d'une session. Il est largement utilisé pour des commandes de services de messagerie instantanée. Ainsi, dans un environnement SIP, il existe différents types de communications telles que des requêtes d'établissement de sessions et des requêtes échangées hors de tout dialogue.

Ces protocoles évolués de contrôle de session utilisent notamment des messages dits "de signalisation", qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

L'invention concerne notamment (mais pas exclusivement) les infrastructures de type IMS ("*IP Multimedia Subsystem"*). L'IMS a été défini par les organismes de normalisation 3GPP (*"3rd Generation Partnership Project"*) et TISPAN ("*Telecommunications and Internet Converged Services and Protocols for Advanced Networking*"). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Elle gère aussi l'interaction de services. L'IMS permet actuellement d'accéder à des services de type téléphonie, visiophonie, présence et messagerie instantanée.

Lorsqu'un utilisateur souhaite bénéficier des services offerts par un réseau IP tel que ceux décrits ci-dessus, il émet vers le réseau des messages de signalisation pouvant inclure notamment divers types de requêtes.

Tout d'abord, le terminal de l'utilisateur doit s'enregistrer sur le réseau. Lorsque le réseau est incapable de faire le lien entre cet enregistrement et un enregistrement précédent (par exemple suite à une panne réseau, ou suite à un arrêt du terminal pendant une durée supérieure à une valeur prédéterminée), l'enregistrement est considéré comme étant un enregistrement initial. Après un enregistrement initial, le terminal de l'utilisateur doit envoyer périodiquement au réseau une requête pour confirmer qu'il souhaite maintenir son enregistrement.

Par ailleurs, quand le réseau met en oeuvre le protocole SIP, les terminaux des usagers peuvent, en envoyant une requête correspondante, souscrire à certains services. Il peut s'agir d'un service de notification d'évènement : par exemple, lorsque l'utilisateur dispose d'une boîte vocale sur le réseau, son terminal peut souscrire à une notification de dépôt de message, c'est-à-dire qu'il peut demander à être informé chaque fois qu'un message a été enregistré sur cette boîte vocale ; le terminal de l'utilisateur peut, de même, demander à être notifié de son état d'enregistrement ; il peut également souscrire à un service de notification de présence, qui lui permet de recevoir des informations publiées par un autre utilisateur qu'il a désigné, et ainsi de suite.

Après la requête de souscription initiale, le terminal doit envoyer périodiquement au réseau une requête pour renouveler sa souscription.

Les divers états du système terminal-réseau requérant un rafraîchissement périodique sont communément désignés par le terme anglais "*soft-states*". Les normes en vigueur imposent aux terminaux de comporter des temporisateurs leur permettant d'envoyer les requêtes de rafraîchissement d'enregistrement ou de souscription de manière automatique.

L'enregistrement d'un terminal s'effectue auprès du coeur de réseau. Cet enregistrement n'est maintenu que pendant une durée de bail d'enregistrement prédéterminée, appelée communément "Expires_coeur", et que nous dénoterons, par commodité, avec la lettre $B$ ; à titre exemple, le document RFC 3261 mentionné ci-dessus préconise une valeur de $B$ égale à 3600 secondes. Autrement dit, si le coeur de réseau a reçu de la part d'un terminal une requête d'enregistrement initial ou de rafraîchissement d'enregistrement à un instant $t_0$, il est impératif, pour que l'enregistrement de ce terminal soit maintenu, que le coeur de réseau reçoive subséquemment une requête de rafraîchissement d'enregistrement à un instant $t_1$ tel que $t_1 - t_0 \leq B$.

Plus précisément, lorsqu'un terminal émet une requête d'enregistrement initial vers le réseau, cette requête est d'abord reçue par un équipement d'accès, qui la relaie vers le coeur de réseau. Si le coeur de réseau accepte l'enregistrement, il répond à l'équipement d'accès au moyen d'un message de confirmation d'enregistrement, qui prescrit la durée de bail d'enregistrement $B$ = Expires_coeur mentionnée ci-dessus. Ensuite, l'équipement d'accès envoie au terminal un message de confirmation d'enregistrement, qui prescrit au terminal une certaine période de rafraîchissement d'enregistrement.

On notera que cette période de rafraîchissement d'enregistrement prescrite au terminal, appelée communément "Expires_accès" et que nous dénoterons par commodité avec la lettre $P$, n'est pas toujours égale à la période $B$ = Expires_coeur mentionnée ci-dessus. En effet, l'équipement d'accès peut, pour diverses raisons techniques, avoir besoin de recevoir des requêtes de rafraîchissement plus fréquentes, de sorte que la période de rafraîchissement $P$ prescrite par cet équipement d'accès vérifie $P<B$. On parle dans ce cas de *"Registration Caching"* d'après la terminologie ango-saxonne. A titre d'exemple, on utilise dans certains réseaux actuels une valeur *de P* égale à 1450 secondes. Dans ce cas, l'équipement d'accès ne relaie pas nécessairement vers le coeur de réseau toutes les requêtes de rafraîchissement d'enregistrement qu'il reçoit de la part d'un terminal : il peut, si la durée écoulée entre l'instant où il reçoit une requête de rafraîchissement d'enregistrement et l'instant où il a relayé en dernier une requête d'enregistrement de ce terminal est courte par rapport à $B$, répondre au terminal en lui confirmant son enregistrement et en lui prescrivant ladite période $P$, mais sans relayer cette requête vers le coeur de réseau.

Enfin, les terminaux sont habituellement programmés de telle sorte que, lorsqu'un terminal se voit prescrire une période de rafraîchissement d'enregistrement $P$, il va appliquer en réponse une période de rafraîchissement d'enregistrement effective, que nous dénoterons avec la lettre $Q$, et dont la valeur est choisie, par précaution, plus courte que $P$. A cet égard, on connaît diverses façons de programmer les terminaux ; par exemple, on peut trouver :

$$Q = P/2 \, ,$$

ou

$$Q = P - 600 \text{ secondes,}$$

ou encore

$$Q = P - \text{ quelques secondes}$$

(quelle que soit la valeur de $P$).

Après s'être enregistré initialement, un terminal peut, comme expliqué ci-dessus, souscrire à certains services (par exemple à une notification de dépôt de message, ou à une notification de présence, ou encore à une notification d'état d'enregistrement). Les requêtes de souscription initiales sont émises soit de manière automatique juste après l'enregistrement initial, soit suite à une action de l'utilisateur sur l'interface du terminal. Pour chaque souscription (qu'il s'agisse d'une souscription initiale ou d'un rafraîchissement), le réseau indique au terminal la période de rafraîchissement souhaitée par l'opérateur du réseau pour cette souscription. Dans le cas du document RFC 3265, la période de rafraîchissement de souscription maximale mise en oeuvre par le coeur de réseau est définie par renvoi à la partie appelée *"event-package"* du document définissant le type de souscription ; par exemple, concernant la souscription à la notification de dépôt de message, le document RFC 3842 préconise (voir *"event-package message summary"*) une période de rafraîchissement allant de quelques heures à quelques jours.

Dans ce contexte, pendant le fonctionnement normal du réseau, ce dernier reçoit des requêtes d'enregistrement initial et de souscription initiale, et des requêtes de rafraîchissement d'enregistrement et de souscription, au fur et à mesure que les usagers du réseau se connectent puis renouvellent leur enregistrement et leurs souscriptions au bout des périodes de rafraîchissement respectives prévues. La capacité de traitement des noeuds du réseau est évidemment prévue pour faire face à la fréquence de requêtes correspondante, notamment en fonction du nombre habituel d'usagers du réseau. Dans de nombreux cas, et en particulier dans le cas des réseaux et services dits "*always-on*", le taux de reconnexion et donc le taux d'enregistrements initiaux et de souscriptions initiales en fonctionnement normal est particulièrement bas.

Mais des difficultés particulières se présentent en cas de panne partielle ou globale du réseau.

En effet, quand une panne de réseau intervient et que des utilisateurs constatent, ou supposent que, en raison de la panne, leur enregistrement a été perdu, les terminaux de ces utilisateurs entrent dans un mode particulier de fonctionnement, dit "mode de recouvrement d'enregistrement", dans lequel ces terminaux cherchent à effectuer un enregistrement initial, d'ailleurs habituellement suivi d'une ou plusieurs souscriptions initiales. La tentative d'enregistrement initial peut résulter d'une action de l'utilisateur sur l'interface du terminal, ou automatiquement du terminal en fonction de sa programmation. Par exemple, les terminaux de type "LiveBox" commercialisés par France Télécom sont actuellement programmés pour tenter de s'enregistrer toutes les 4 minutes. Ainsi, les terminaux appliquent une période de temporisation, qui est habituellement comprise entre quelques dizaines de secondes et quelques minutes, mais qui, en tout état de cause, est beaucoup plus courte que la période Q de rafraîchissement d'enregistrement effective mentionnée ci-dessus. Il en résulte un rythme anormalement élevé de tentatives d'enregistrement.

Ainsi, dans l'état de l'art comme par exemple dans le document US 2008/182575 A1, lors du redémarrage du réseau, les terminaux envoient leurs requêtes d'enregistrement respectives de manière légèrement décalée les unes par rapport aux autres. Pendant une durée de l'ordre de la période de temporisation moyenne, le réseau doit alors faire face à un afflux anormalement élevé de requêtes, et ce d'autant plus que la panne dure longtemps. De plus, en supposant que le réseau soit capable de traiter ce trafic de redémarrage, il devra faire face à un nouvel afflux de requêtes issus des mêmes terminaux au bout de la période de rafraîchissement d'enregistrement.

Mais l'hypothèse selon laquelle le réseau est capable de traiter toutes les requêtes de signalisation lors du redémarrage s'avère souvent être fausse en pratique. En effet, chaque noeud du réseau traite, en fonction de sa capacité (qui peut varier d'un noeud à l'autre), les premières requêtes qu'il reçoit ; ce faisant, le niveau de charge des noeuds du réseau augmente rapidement jusqu'à, bien souvent, atteindre la surcharge. Dans ces conditions, un ou plusieurs noeuds du réseau (notamment dans le coeur de réseau) n'arrivent plus à satisfaire à temps à toutes les requêtes. Plus précisément, pour les terminaux dont la requête n'a pu être traitée :

- soit ces terminaux reçoivent une réponse d'échec du réseau,
- soit ces terminaux ne reçoivent aucune réponse dans un temps imparti ($64 \cdot T_1$, soit 32 secondes si $T_1 = 500$ ms selon le document RFC 3261), et ils en déduisent que leur requête d'enregistrement a échoué.

Ces terminaux vont alors effectuer des tentatives d'enregistrement successives, mutuellement séparées par ladite période de temporisation, jusqu'à ce qu'ils réussissent finalement à se connecter ou se reconnecter (ou abandonnent...).

Pour un terminal donné, la durée pendant laquelle ce terminal doit, suite à une panne du réseau, attendre avant d'être à nouveau enregistré est donc en moyenne une fonction croissante de sa période de temporisation. En disant "en moyenne", on se réfère au fait que, pour un terminal donné, cette durée dépend également du moment auquel ce terminal tente de s'enregistrer par rapport au moment où la panne prend fin. En effet, si par chance il tente de s'enregistrer juste après la fin de la panne, et à supposer que le réseau ne soit pas surchargé, il va réussir à s'enregistrer quasiment à coup sûr ; si en revanche, il tente de s'enregistrer juste avant la fin de la panne, il va attendre toute la période de temporisation avant de tenter à nouveau de s'enregistrer.

En résumé, lorsqu'une panne se produit dans les systèmes de télécommunications connus, on observe une saturation du réseau et une longue attente de la part d'un certain nombre d'utilisateurs pour pouvoir se connecter ou se reconnecter.

La présente invention concerne donc un procédé de gestion de la signalisation dans un réseau de télécommunications, dans lequel, en fonctionnement normal, un équipement d'accès audit réseau prescrit à un terminal une période de rafraîchissement d'enregistrement P. Ledit procédé est remarquable en ce que, suite à la détection par ledit équipement d'accès d'une panne affectant le coeur de réseau puis à la réception par l'équipement d'accès d'une requête de rafraîchissement d'enregistrement de la part dudit terminal, l'équipement d'accès :

- détermine la durée R d'enregistrement restante au niveau du coeur de réseau pour le terminal ainsi que la période de rafraîchissement effective Q mise en oeuvre par le terminal lorsque l'équipement d'accès lui a prescrit une période de rafraîchissement égale à P , et
- dans le cas où R≥Q, envoie au terminal une confirmation d'enregistrement sans relayer ladite requête vers le coeur de réseau.

Ainsi, selon l'invention, l'équipement d'accès qui a détecté une panne dans le réseau, d'une part, confirme son enregistrement à un terminal émetteur d'une requête de rafraîchissement d'enregistrement, et d'autre part s'abstient de relayer cette requête vers le coeur de réseau. De préférence, l'équipement d'accès retourne à son mode de fonctionnement normal (c'est-à-dire, hors panne) dès qu'il détecte la fin de la panne.

En évitant que l'équipement d'accès ne relaie ces requêtes de rafraîchissement d'enregistrement vers le coeur de réseau, l'invention permet de supprimer le risque que le terminal ne subisse l'échec d'une requête de rafraîchissement, et ne s'aperçoive ainsi de l'existence de la panne. Plus précisément, si la panne est suffisamment courte, ce dernier ne pourra s'apercevoir du fait qu'il y a eu une panne que s'il a été empêché d'utiliser un service (par exemple, placer un appel vers un autre utilisateur) en raison de la panne, auquel cas, selon sa programmation, il va essayer ou non de se réenregistrer.

L'invention permet donc de diminuer le nombre de terminaux qui entrent dans un mode de recouvrement d'enregistrement suite à la panne, de sorte que l'encombrement du trafic de signalisation provoqué par ce mode est réduit. En particulier, si le réseau dispose, au niveau du coeur de réseau, d'un serveur de secours (dont la capacité de traitement est, a *priori,* inférieure à celle du serveur primaire tombé en panne), cette réduction du trafic de recouvrement d'enregistrement permet de retarder le basculement du trafic vers le serveur de secours, ce qui laisse plus de temps à l'opérateur du réseau pour essayer de réparer la panne avant de basculer le trafic vers le serveur de secours.

De plus, la qualité de service telle que perçue par les utilisateurs ("*Quality of Experience",* ou QOE, en anglais) est évidemment accrue.

On notera enfin que le mécanisme selon l'invention est avantageusement indépendant de la programmation des terminaux.

Selon des caractéristiques particulières, dans ledit cas $R \geq Q$, l'équipement d'accès prescrit audit terminal une période de rafraîchissement d'enregistrement $S = P$ .

Grâce à ces dispositions, le réseau d'accès continue (pendant un certain temps) à interagir avec ledit terminal comme en fonctionnement normal.

Selon d'autres caractéristiques particulières, ledit équipement d'accès envoie au terminal une confirmation d'enregistrement sans relayer ladite requête vers le coeur de réseau également dans le cas où $\varepsilon < R < Q$ , *où* $\varepsilon$ est une durée prédéterminée positive ou nulle.

Grâce à ces dispositions, on continue à éviter que l'équipement d'accès ne relaie vers le coeur de réseau de requêtes de rafraîchissement d'enregistrement reçues de la part de ce terminal -- au moins jusqu'à l'expiration de l'enregistrement ($t_1-t_0=B$, c'est-à-dire $R=0$). En retardant ainsi autant que possible la retransmission d'une requête de rafraîchissement d'enregistrement vers le coeur de réseau, on retarde le risque que le terminal ne subisse l'échec d'une requête de rafraîchissement, et ne s'aperçoive ainsi de l'existence de la panne. De ce fait, on étale dans le temps le nombre de terminaux qui vont entrer dans un mode de recouvrement d'enregistrement suite à la panne.

On prendra $\varepsilon$ non-nul si l'on estime que, pour $0 < R \leq \varepsilon,$ cela ne vaut pas la peine d'obliger le terminal à émettre une nouvelle requête de rafraîchissement d'enregistrement dans un délai extrêmement court ; dans ce cas, on pourra par exemple prendre $\varepsilon$ de l'ordre de quelques secondes.

Selon des caractéristiques encore plus particulières, dans ledit cas $\varepsilon < R < Q,$ l'équipement d'accès prescrit au terminal une période de rafraîchissement d'enregistrement $S = R + P - Q.$

Grâce à ces dispositions, le terminal enverra à l'équipement d'accès une prochaine requête de rafraîchissement d'enregistrement telle que $R$ soit nul.

Selon des caractéristiques particulières, suite à la réception par l'équipement d'accès d'une requête de rafraîchissement pour un type prédéterminé de souscription de la part dudit terminal, l'équipement d'accès :

- détermine la durée $R$' restante pour ledit type de souscription au niveau du coeur de réseau pour le terminal ainsi que la période de rafraîchissement effective $Q$' mise en oeuvre par le terminal lorsque l'équipement d'accès lui a prescrit une période de rafraîchissement égale à $P'$, où $P'$ est la période de rafraîchissement pour ledit type de souscription prescrite au terminal par l'équipement d'accès en fonctionnement normal, et
- dans le cas où $R' \geq Q'$, envoie au terminal une confirmation pour la souscription dudit type sans relayer ladite requête vers le coeur de réseau.

Selon des caractéristiques encore plus particulières, l'équipement d'accès envoie au terminal une confirmation pour ledit type de souscription sans relayer ladite requête vers le coeur de réseau également dans le cas où $\varepsilon' < R' < Q'$, où $\varepsilon'$ est une durée prédéterminée positive ou nulle.

Grâce à ces dispositions, on peut également supprimer ou, du moins, retarder le transfert vers le coeur de réseau des requêtes de souscription, de manière à éviter la congestion du réseau suite à une panne.

Corrélativement, l'invention concerne un système de gestion de la signalisation dans un réseau de télécommunications, comprenant un équipement d'accès audit réseau qui, en fonctionnement normal, prescrit à un terminal une période de rafraîchissement d'enregistrement $P$. Ledit système est remarquable en ce que ledit équipement d'accès possède des moyens pour, suite à la détection par ledit équipement d'accès d'une panne affectant le coeur de réseau puis à la réception par l'équipement d'accès d'une requête de rafraîchissement d'enregistrement de la part dudit terminal :

- déterminer la durée $R$ d'enregistrement restante au niveau du coeur de réseau pour le terminal ainsi que la période de rafraîchissement effective $Q$ mise en oeuvre par le terminal lorsque l'équipement d'accès lui a prescrit une période de rafraîchissement égale à $P$ , et
- dans le cas où $R \geq Q,$ envoyer au terminal une confirmation d'enregistrement sans relayer ladite requête vers le coeur de réseau.

Selon des caractéristiques particulières, dans ledit cas $R \geq Q$, l'équipement d'accès possède en outre des moyens pour prescrire audit terminal une période de rafraîchissement d'enregistrement $S = P$.

Selon d'autres caractéristiques particulières, ledit équipement d'accès possède en outre des moyens pour envoyer au terminal une confirmation d'enregistrement sans relayer ladite requête vers le coeur de réseau également dans le cas où $\varepsilon < R < Q$, où $\varepsilon$ est une durée prédéterminée positive ou nulle.

Selon des caractéristiques encore plus particulières, dans ledit cas $\varepsilon < R < Q$, l'équipement d'accès possède en outre des moyens pour prescrire au terminal une période de rafraîchissement d'enregistrement $S = R + P - Q$.

Selon d'autres caractéristiques particulières, ledit équipement d'accès possède en outre des moyens pour, suite à la réception par l'équipement d'accès d'une requête de rafraîchissement pour un type prédéterminé de souscription de la part dudit terminal :

- déterminer la durée $R'$ restante pour ledit type de souscription au niveau du coeur de réseau pour le terminal ainsi que la période de rafraîchissement effective $Q'$ mise en oeuvre par le terminal lorsque l'équipement d'accès lui a prescrit une période de rafraîchissement égale à $P'$, où $P'$ est la période de rafraîchissement pour ledit type de souscription prescrite au terminal par l'équipement d'accès en fonctionnement normal, et
- dans le cas où $R' \geq Q'$, envoyer au terminal une confirmation pour la souscription dudit type sans relayer ladite requête vers le coeur de réseau.

Selon des caractéristiques encore plus particulières, l'équipement d'accès possède en outre des moyens pour envoyer au terminal une confirmation pour ledit type de souscription sans relayer ladite requête vers le coeur de réseau également dans le cas où $\varepsilon' < R' < Q'$, où $\varepsilon'$ est une durée prédéterminée positive ou nulle.

Les avantages offerts par ces systèmes de gestion de la signalisation sont essentiellement les mêmes que ceux offerts par les procédés corrélatifs succinctement exposés ci-dessus.

On notera qu'il est possible de réaliser le système de gestion de la signalisation succinctement décrit ci-dessus dans le contexte d'instructions logicielles et/ou dans le contexte de circuits électroniques.

Ledit équipement d'accès peut notamment comprendre un ordinateur-serveur. En particulier, lorsque l'infrastructure du réseau de télécommunications est de type IMS, ce serveur sera avantageusement constitué par un serveur "P-CSCF".

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de gestion de la signalisation succinctement exposés ci-dessus, lorsqu'il est exécuté sur un ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :

- la figure 1 représente schématiquement un système pour la fourniture de services multimédia apte à mettre en oeuvre l'invention, et
- la figure 2 représente un exemple d'application de l'invention à la procédure de rafraîchissement d'enregistrement d'un terminal pendant une panne.

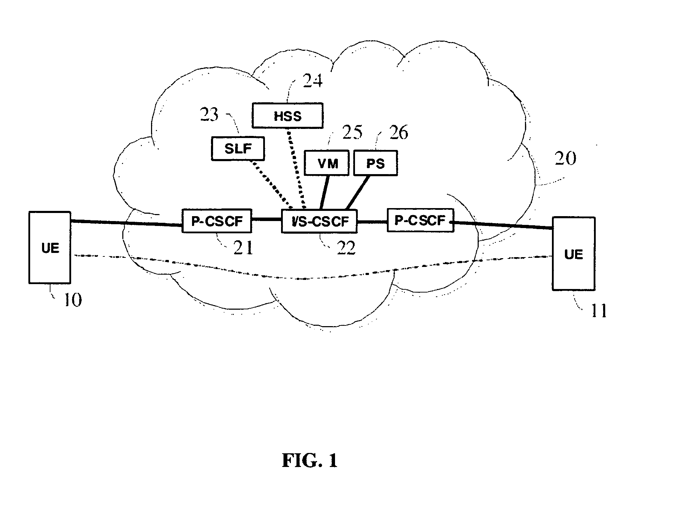

Le système illustré sur la **figure 1** est fondé sur une architecture de réseau de type IMS, tel que présenté succinctement ci-dessus. Les services multimédia offerts par un tel système peuvent comprendre des services de téléphonie, de vidéo-téléphonie, de partage de contenu (*"content-sharing"* en anglais), de présence, de messagerie instantanée, ou de télévision. Ces services sont à la disposition de l'utilisateur d'un terminal UE (pour *"User Equipment"* en anglais) 10 sur un réseau 20 comprenant une infrastructure de transport IP et des serveurs IMS à travers lesquels le terminal 10 peut échanger des messages de signalisation SIP et des flux multimédias notamment avec un autre terminal UE 11, les terminaux 10 et 11 s'étant au préalable enregistrés auprès des serveurs IMS du réseau 20.

Les terminaux 10 et 11 sont des terminaux fixes ou mobiles disposant de moyens de signalisation SIP et pouvant comprendre des moyens de restitution d'un contenu audiovisuel.

Comme le montre la figure 1, ce système de fourniture de services s'appuie sur un réseau 20 conforme à l'architecture IMS définie au 3GPP, et qui comprend :

- une infrastructure de transport IP (non représentée) ;

- un ou plusieurs serveurs de routage I/S-CSCF (pour la combinaison d'une fonction *"Interrogating-Call Server Control Function"* et d'une fonction *"Serving-Call Server Control Function"* dans le même serveur) ; un serveur de routage I/S-CSCF 22 gère notamment la procédure d'enregistrement du terminal 10 dans le réseau 20, le routage de la signalisation entre le terminal 10 et les serveurs d'applications de messagerie vocale VM 25 et de présence PS 26 hébergeant les services souscrits par l'utilisateur du terminal 10, ainsi que le routage en direction d'autres terminaux gérés par le même réseau IMS (comme par exemple le terminal 11) et le routage de la signalisation entre ce réseau IMS 20 et d'autres réseaux (non-représentés) ;
- un ou plusieurs serveurs P-CSCF (pour *"Proxy-Call Server Control Function"*); un serveur P-CSCF 21 est le point de contact SIP du terminal 10 dans le réseau IMS ; ainsi, toute la signalisation SIP échangée entre le terminal 10 et le serveur de routage I/S-CSCF 22 gérant le terminal 10 passe par ce serveur P-CSCF 21 ;
- un ou plusieurs serveurs de base de données, de type HSS (pour *"Home Subscriber Server"*) ; un serveur HSS 24 contient le profil de l'utilisateur du terminal 10 en termes de données d'authentification, de localisation et de services souscrits ;
- optionnellement, un serveur de type SLF (pour *"Subscriber Location Function"*); un serveur SLF 23 est utilisé dans les réseaux contenant plusieurs serveurs HSS ; ce serveur SLF 23 est interrogé par les fonctions I-CSCF et S-CSCF pour trouver l'adresse du serveur HSS 24 hébergeant les données de l'utilisateur du terminal 10 ;
- un ou plusieurs serveurs d'application de messagerie vocale VM ; un serveur VM 25 gère la messagerie vocale de l'utilisateur du terminal 10 ; en particulier, le serveur VM 25 gère la souscription du terminal 10 aux événements de dépôt/consultation des messages de l'utilisateur de ce terminal, et notifie le terminal 10 lors de l'occurrence de ces événements ; et
- un ou plusieurs serveurs d'application de présence PS ; un serveur PS 26 gère notamment la souscription du terminal 10 aux événements de présence que l'utilisateur de ce terminal souhaite surveiller, et notifie le terminal lors de l'occurrence de ces événements.

Le serveur de base de données HSS 24 est notamment interrogé :

- par la fonction I-CSCF lors de l'enregistrement du terminal 10 afin d'allouer un serveur I/S-CSCF 22 à l'utilisateur de ce terminal ou de retrouver le serveur I/S-CSCF 22 déjà alloué à cet utilisateur ;
- par la fonction S-CSCF lors de l'enregistrement initial du terminal 10 afin de télécharger les données concernant les services souscrits par cet utilisateur, dont notamment les points de détection qui permettront au serveur I/S-CSCF 22 de déterminer quel message de signalisation il doit acheminer vers quel serveur d'application (comme par exemple VM 25 et PS 26) ;
- par la fonction S-CSCF lors des enregistrements de l'utilisateur du terminal 10, afin d'informer le serveur HSS 24 de l'installation ou de la prolongation d'un enregistrement de cet utilisateur sur le serveur I/S-CSCF 22 ; et
- par la fonction S-CSCF, afin de récupérer les informations nécessaires à l'authentification de la signalisation émise par l'utilisateur du terminal 10.

En effet, le terminal 10 doit être obligatoirement enregistré au niveau du coeur de réseau (en l'occurrence, le serveur I/S-CSCF 22) pour que l'utilisateur de ce terminal puisse utiliser les services fournis par le réseau 20 à partir de ce terminal. Dans le cadre du protocole SIP, les procédures d'enregistrement utilisent une requête appelée "SIP REGISTER".

La procédure d'enregistrement initial du terminal 10 est normalement exécutée lors du démarrage du terminal (ou d'une application installée sur ce terminal) par l'utilisateur. Comme expliqué ci-dessus, un enregistrement a une durée de validité qui est limitée dans le temps : la durée $(t_1-t_0)$ entre deux requêtes d'enregistrement (initial ou de rafraîchissement) reçues par le coeur 22 de réseau doit être inférieure ou égale à une durée de bail d'enregistrement prédéterminée (habituellement appelée "Expires_coeur", et notée $B$ dans le cadre de la présente invention). En fonctionnement normal, le terminal 10 rafraîchit son enregistrement automatiquement et périodiquement. La périodicité $Q$ d'envoi des requêtes de rafraîchissement par le terminal 10 dépend, d'une part, de la période de rafraîchissement (habituellement appelée "Expires_accès", et notée $P$ dans le cadre de la présente invention) qui lui est prescrite par l'équipement d'accès (en l'occurrence le serveur P-CSCF 21), et d'autre part de la programmation du terminal. [Remarque : pour simplifier la présente description, on négligera les durées de transit subies par les messages au sein du réseau ; l'homme du métier saura, au besoin, effectuer les ajustements nécessaires.]

Dans le cas où le réseau utilise une fonctionnalité de *"registration caching"*, la période de rafraîchissement $P$ prescrite au terminal est inférieure à la période de bail d'enregistrement $B$ appliquée au niveau du coeur 22 de réseau. De plus, dans ce cas, l'équipement d'accès 21 relaie habituellement vers le coeur 22 de réseau une requête de rafraîchissement d'enregistrement reçue à un instant $t_1$ de la part du terminal 10 si, et seulement si, $t_1-t_0 > (B/2)$, où $t_0$ est l'instant de la dernière retransmission de requête de rafraîchissement d'enregistrement au coeur 22 de réseau ; la requête reçue à l'instant $t_1$ est donc en fait la $n$-ème requête reçue par l'équipement d'accès 21 de la part du terminal 10 postérieurement à l'instant $t_0$, avec :

$$n = \text{INT}\left[\frac{(B/2)}{Q} + 1\right], \text{ et } t_1 - t_0 = n \cdot Q,$$

où INT désigne la partie entière. Par exemple, avec les valeurs numériques suivantes :

$B$ = 3600 secondes, $P$ = 1450 secondes, et
$Q$ = $P$ - 600 secondes = 850 secondes,

on obtient $n$ = 3, de sorte que l'équipement d'accès 21 relaie vers le coeur 22 de réseau une requête de rafraîchissement d'enregistrement toutes les $n \cdot Q$ = 2550 secondes.

Certains services comme ceux du serveur VM 25 et du serveur PS 26 s'appuient sur la souscription du terminal 10 à des événements (par exemple de dépôt/consultation de message, ou de présence). La procédure de souscription initiale du terminal 10 auprès du réseau 20 est normalement exécutée lors du démarrage du terminal (ou d'une application installée sur ce terminal) par l'utilisateur, juste après la procédure d'enregistrement initial. Une procédure de souscription initiale est exécutée pour chaque type d'événement souscrit (par exemple, la souscription initiale aux événements de dépôt/consultation de message est effectuée indépendamment de la souscription initiale aux événements de présence). Une souscription a une durée limitée dans le temps. Cette durée peut être différente pour chaque type d'événement souscrit, et elle est également indépendante de la durée de bail d'enregistrement. Dans des conditions de fonctionnement normal, le terminal 10 doit renouveler sa ou ses souscriptions à des événements automatiquement et périodiquement. Comme indiqué ci-dessus, les requêtes de maintien de souscription sont appelées ici "rafraîchissements de souscription". Dans le cadre du protocole SIP, les procédures de souscription à des événements utilisent une requête appelée "SIP SUBSCRIBE".

Différents types de panne peuvent rendre indisponibles les services fournis par le réseau 20 à l'utilisateur du terminal 10. En particulier:

- les pannes de type "A" ayant pour conséquence une perte des données associées à l'enregistrement du terminal 10 au niveau du serveur P-CSCF 21 ou du serveur I/S-CSCF 22 ou du serveur HSS 24;
- les pannes de type "B" ayant pour conséquence le blocage de la transmission de la signalisation entre le terminal 10 et le serveur P-CSCF 21, ou entre le serveur P-CSCF 21 et le serveur I/S-CSCF 22, ou entre le serveur I/S-CSCF 22 et le serveur SLF 23, ou entre le serveur I/S-CSCF 22 et le serveur HSS 24 (il s'agit ici essentiellement de l'infrastructure de transport IP du réseau 20).

On constate habituellement que les pannes de type "B" sont plus fréquentes, et provoquent une indisponibilité de service plus élevée que les pannes de type "A".

Quel que soit le type de panne, il est clair qu'un terminal non enregistré cherchant à se connecter au réseau pendant la panne verra sa requête d'enregistrement initial échouer (réponse d'échec de la part du réseau, ou absence de réponse dans un temps imparti). Quant aux terminaux qui étaient enregistrés avant le début de la panne, ils s'apercevront nécessairement de l'existence de la panne (lorsqu'une requête de rafraîchissement d'enregistrement n'aboutit pas) dans le cas où la durée de la panne est supérieure à la période de bail d'enregistrement.

Dans le cas où la durée de la panne est inférieure ou égale à la période de bail d'enregistrement, les auteurs de la présente invention ont réalisé qu'un terminal qui était enregistré avant le début de la panne ne peut s'apercevoir de l'existence de la panne que :

- s'il place un appel qui n'aboutit pas (cela dépendra de la façon dont la panne affecte sa connexion), ou
- s'il émet une requête de rafraîchissement d'enregistrement qui n'aboutit pas.

Or, comme expliqué ci-dessus, l'opérateur du réseau 20 a fortement intérêt à essayer de diminuer le nombre d'utilisateurs qui s'aperçoivent de la panne. L'invention permet notamment, dans les conditions ci-dessus, de supprimer ou du moins retarder (selon la durée de la panne et la durée écoulée depuis le dernier enregistrement du terminal lorsque la panne intervient), le risque qu'un tel terminal ne voie une de ses requêtes de rafraîchissement d'enregistrement échouer.

Dans le présent mode de réalisation de l'invention, suite à la détection par le serveur P-CSCF 21 d'une panne affectant le serveur I/S-CSCF 22 puis à la réception par le serveur P-CSCF 21 d'une requête de rafraîchissement d'enregistrement de la part du terminal 10, le serveur P-CSCF 21 s'abstient de relayer la requête vers le serveur I/S-CSCF 22 :

- dans le cas où $R \geq Q$ , où $R$ est la durée d'enregistrement restante au niveau du serveur I/S-CSCF 22 pour le terminal 10, auquel cas le serveur P-CSCF 21 prescrit au terminal 10 une période de rafraîchissement d'enregistrement $S$ = $P$ ; ou
- dans le cas où $\varepsilon < R < Q$, où $\varepsilon$ est une durée prédéterminée positive ou nulle, auquel cas le serveur P-CSCF 21 prescrit au terminal 10 une période de rafraîchissement d'enregistrement

$$S = R + P - Q \; .$$

On rappelle que P désigne la période de rafraîchissement d'enregistrement prescrite par le serveur P-CSCF 21 au terminal 10 en fonctionnement normal (c'est à dire, hors panne), et $Q$ est la période de rafraîchissement effective mise en oeuvre par le terminal 10 lorsque le serveur P-CSCF 21 lui a prescrit une période de rafraîchissement égale à $P$.

On notera à cet égard qu'il existe dans l'état de l'art divers moyens pour permettre à un noeud de réseau de télécommunications de détecter la panne d'un autre noeud du réseau. De tels moyens peuvent par exemple s'appuyer sur la détection de l'absence de réception de messages de signalisation pendant une certaine période de temps entre les deux noeuds. Pour effectuer une telle détection, il est notamment possible de s'appuyer sur les messages de signalisation envoyés par les terminaux et normalement relayés par les noeuds, ou sur l'émission de messages de signalisation échangés uniquement entre deux noeuds, ou encore sur une combinaison de ces deux méthodes. La détection de la fin de la panne s'appuie quant à elle sur la réception de messages de signalisation provenant du noeud précédemment considéré comme étant en panne.

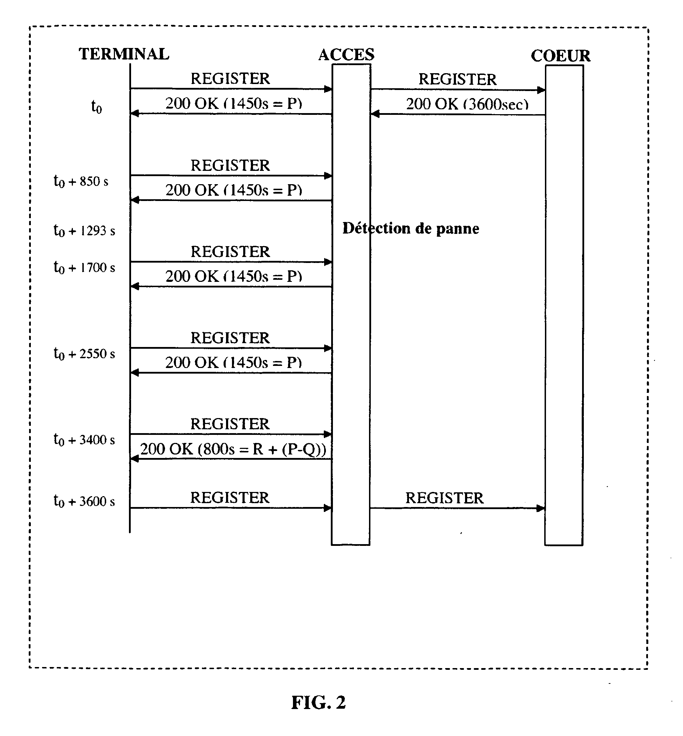

On va maintenant illustrer le fonctionnement et les avantages de l'invention au moyen d'un exemple numérique, en référence à la figure 2.

Dans cet exemple, on considère un terminal 10, qui a été programmé pour mettre en oeuvre une période de rafraîchissement d'enregistrement effective inférieure de 600 secondes à la période de rafraîchissement d'enregistrement (quelle que soit sa valeur) que lui prescrit l'équipement qui lui donne accès au réseau 20 (en l'occurrence, le serveur P-CSCF 21). De plus, on se place dans le cas où le serveur P-CSCF 21) pratique le *"registration caching"* (P= 1450 secondes < $B$ = 3600 secondes, où $B$ est la durée de bail d'enregistrement auprès du coeur de réseau, en l'occurrence le serveur I/S-CSCF 22). Enfin, on choisit $\varepsilon$ = 10 secondes.

A l'instant $t = t_0$, le terminal 10 envoie une requête d'enregistrement (initial ou de rafraîchissement) au serveur P-CSCF 21. Le serveur P-CSCF 21 relaie la requête d'enregistrement vers le serveur I/S-CSCF 22, qui répond au serveur P-CSCF 21 en acceptant l'enregistrement (message du type "200 OK" selon le protocole SIP) et en prescrivant une période de rafraîchissement $B$ = 3600 secondes. Le serveur P-CSCF 21 confirme son enregistrement au terminal 10 (message "200 OK"), et lui prescrit une période de rafraîchissement $P$= 1450 secondes.

A l'instant $t = t_0$ + 850 secondes (puisque $Q$ = 1450 - 600 = 850 secondes), le terminal 10 envoie une requête de rafraîchissement d'enregistrement au serveur P-CSCF 21 ; le serveur P-CSCF 21 confirme son enregistrement au terminal 10, et lui prescrit une période de rafraîchissement $P$ = 1450 secondes. Le serveur P-CSCF 21 ne relaie pas la requête d'enregistrement vers le serveur I/S-CSCF 22 puisque $t - t_0$ = 850 < $(B/2)$ = 1800 secondes. En revanche, le serveur P-CSCF 21, s'il ne l'a pas fait auparavant, note que le terminal 10 est programmé selon $Q$ = $P$ - 600 secondes.

A l'instant $t = t_0$ + 1293 secondes, le serveur P-CSCF 21 détecte une panne dans le réseau 20.

A l'instant $t = t_0$+ 1700 secondes (puisque 850 + 850 = 1700), le terminal 10 envoie une requête de rafraîchissement d'enregistrement au serveur P-CSCF 21. Le serveur P-CSCF 21 constate que le terminal 10 est encore enregistré auprès du serveur I/S-CSCF 22 pendant une durée $R$ = $B$ - $(t - t_0)$ = 3600 - 1700 = 1900 secondes, qui est supérieure à $Q$ = 850 secondes. Par conséquent, le serveur P-CSCF 21 confirme son enregistrement au terminal 10, et lui prescrit une période de rafraîchissement $S$ = $P$ = 1450 secondes. On notera que, conformément à l'invention, le serveur P-CSCF 21 ne relaie pas cette requête d'enregistrement vers le serveur I/S-CSCF 22, mais qu'il ne l'aurait pas fait non plus selon l'art antérieur puisque $t - t_0$ = 1700 < $(B/2)$ = 1800 secondes.

A l'instant $t = t_0$ + 2550 secondes (puisque 1700 + 850 = 2550), le terminal 10 envoie une requête de rafraîchissement d'enregistrement au serveur P-CSCF 21. Comme $t - t_0$ = 2550 > $(B/2)$ = 1800, cette requête aurait, selon l'art antérieur, été transmise au serveur I/S-CSCF 22. Or le serveur P-CSCF 21 constate que le terminal 10 est encore enregistré auprès du serveur I/S-CSCF 22 pendant une durée $R = B - (t - t_0)$ = 3600 - 2550 = 1050 secondes, qui est supérieure à $Q$ = 850 secondes. Par conséquent, conformément à l'invention, le serveur P-CSCF 21 ne relaie pas cette requête vers le serveur I/S-CSCF 22. Le serveur P-CSCF 21 confirme son enregistrement au terminal 10, et lui prescrit une période de rafraîchissement $S$ = $P$ = 1450 secondes.

A l'instant $t = t_0$ + 3400 secondes (puisque 2550 + 850 = 3400), le terminal 10 envoie une requête de rafraîchissement d'enregistrement au serveur P-CSCF 21. Le serveur P-CSCF 21 constate que le terminal 10 est encore enregistré auprès du serveur I/S-CSCF 22 pendant une durée $R = B\text{-}(t\text{-}t_0)$ = 3600 - 3400 = 200 secondes, qui, bien que supérieure à $\varepsilon$ = 10 secondes, est cette fois inférieure à $Q$ = 850 secondes. Par conséquent, le serveur P-CSCF 21 confirme son enregistrement au terminal 10, et lui prescrit une période de rafraîchissement

$$S = R + P - Q = 200 + 600 = 800 \text{ secondes.}$$

Enfin, à l'instant $t = t_0$ + 3600 secondes (puisque 3400 + (800-600) = 3600), le terminal 10 envoie une requête de rafraîchissement d'enregistrement au serveur P-CSCF 21. Le serveur P-CSCF 21 constate que le terminal 10 est encore enregistré auprès du serveur I/S-CSCF 22 pendant une durée $R = B \text{ - } (t \text{ - } t_0)$ = 3600 - 3600 = 0 secondes inférieure à $\varepsilon$ = 10 secondes (dans notre exemple, cela n'aurait évidemment rien changé si l'on avait choisi $\varepsilon$ nul). Par conséquent, le serveur P-CSCF 21 relaie (ou, du moins, essaie de relayer) la requête d'enregistrement vers le serveur I/S-CSCF 22.

On peut en outre, optionnellement, appliquer une méthode analogue à tel ou tel type de souscription disponible (ou, optionnellement, à plusieurs types agrégés).

La mise en oeuvre de l'invention au sein des noeud du réseau de télécommunications et en particulier au sein de l'équipement d'accès (plus précisément, les serveurs P-CSCF dans l'exemple de réalisation décrit ci-dessus) peut être réalisée au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre du procédé de gestion de la signalisation selon l'invention.

En effet, l'invention vise aussi un programme d'ordinateur téléchargeable depuis un réseau de communication comprenant des instructions pour l'exécution des étapes d'un procédé de gestion de la signalisation selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ("*floppy disc*" en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé de gestion de la signalisation selon l'invention.

**Revendications**

1. Procédé de gestion de la signalisation dans un réseau de télécommunications, dans lequel, en fonctionnement normal, un équipement d'accès (21) audit réseau prescrit à un terminal (10, 11) une période de rafraîchissement d'enregistrement P, **caractérisé en ce que**, suite à la détection par ledit équipement d'accès (21) d'une panne affectant le coeur de réseau (22) puis à la réception par l'équipement d'accès (21) d'une requête de rafraîchissement d'enregistrement de la part dudit terminal (10, 11), l'équipement d'accès (21) :

   - détermine la durée $R$ d'enregistrement restante au niveau du coeur (22) de réseau pour le terminal (10, 11) ainsi que la période de rafraîchissement effective $Q$ mise en oeuvre par le terminal (10, 11) lorsque l'équipement d'accès (21) lui a prescrit une période de rafraîchissement égale à $P$ , et
   - dans le cas où $R{\geq}Q$, envoie au terminal (10, 11) une confirmation d'enregistrement sans relayer ladite requête vers le coeur (22) de réseau.

2. Procédé de gestion de la signalisation selon la revendication 1, **caractérisé en ce que**, dans ledit cas $R \geq Q$, l'équipement d'accès (21) prescrit audit terminal (10, 11) une période de rafraîchissement d'enregistrement $S = P$.

3. Procédé de gestion de la signalisation selon la revendication 1 ou la revendication 2, **caractérisé en ce que** ledit équipement d'accès (21) envoie au terminal (10, 11) une confirmation d'enregistrement sans relayer ladite requête vers le coeur (22) de réseau également dans le cas où $\varepsilon < R < Q$, où $\varepsilon$ est une durée prédéterminée positive ou nulle.

4. Procédé de gestion de la signalisation selon la revendication 3, **caractérisé en ce que**, dans ledit cas $\varepsilon < R < Q$, l'équipement d'accès (21) prescrit au terminal (10, 11) une période de rafraîchissement d'enregistrement $S = R + P - Q$.

5. Procédé de gestion de la signalisation selon l'une quelconque des revendications 1 à 4, **caractérisé en ce que**, suite à la réception par l'équipement d'accès (21) d'une requête de rafraîchissement pour un type prédéterminé de souscription de la part dudit terminal (10, 11), l'équipement d'accès (21) :

   - détermine la durée $R'$ restante pour ledit type de souscription au niveau du coeur (22) de réseau pour le terminal (10, 11) ainsi que la période de rafraîchissement effective $Q'$ mise en oeuvre par le terminal (10, 11) lorsque l'équipement d'accès (21) lui a prescrit une période de rafraîchissement égale à $P'$, où $P'$ est la période de rafraîchissement pour ledit type de souscription prescrite au terminal par l'équipement d'accès en fonctionnement normal, et
   - dans le cas où $R' \geq Q'$, envoie au terminal (10, 11) une confirmation pour la souscription dudit type sans relayer ladite requête vers le coeur (22) de réseau.

6. Procédé de gestion de la signalisation selon la revendication 5, **caractérisé en ce que** l'équipement d'accès (21) envoie au terminal (10, 11) une confirmation pour ledit type de souscription sans relayer ladite requête vers le coeur (22) de réseau également dans le cas où $\varepsilon' < R' < Q'$, où $\varepsilon'$ est une durée prédéterminée positive ou nulle.

7. Système de gestion de la signalisation dans un réseau de télécommunications, comprenant un équipement d'accès (21) audit réseau qui, en fonctionnement normal, prescrit à un terminal (10, 11) une période de rafraîchissement d'enregistrement $P$, **caractérisé en ce que** ledit équipement d'accès (21) possède des moyens pour, suite à la détection par ledit équipement d'accès (21) d'une panne affectant le coeur de réseau (22) puis à la réception par l'équipement d'accès (21) d'une requête de rafraîchissement d'enregistrement de la part dudit terminal (10, 11) :

   - déterminer la durée $R$ d'enregistrement restante au niveau du coeur (22) de réseau pour le terminal (10, 11) ainsi que la période de rafraîchissement effective $Q$ mise en oeuvre par le terminal (10, 11) lorsque l'équipement d'accès (21) lui a prescrit une période de rafraîchissement égale à $P$, et
   - dans le cas où $R \geq Q$, envoyer au terminal (10, 11) une confirmation d'enregistrement sans relayer ladite requête vers le coeur (22) de réseau.

8. Système de gestion de la signalisation selon la revendication 7, **caractérisé en ce que**, dans ledit cas $R \geq Q$, l'équipement d'accès (21) possède en outre des moyens pour prescrire audit terminal (10, 11) une période de rafraîchissement d'enregistrement S = $P$.

9. Système de gestion de la signalisation selon la revendication 7 ou la revendication 8, **caractérisé en ce que** ledit équipement d'accès (21) possède en outre des moyens pour envoyer au terminal (10, 11) une confirmation d'enregistrement sans relayer ladite requête vers le coeur (22) de réseau également dans le cas *où $\varepsilon < R < Q$, où $\varepsilon$* est une durée prédéterminée positive ou nulle.

10. Système de gestion de la signalisation selon la revendication 9, **caractérisé en ce que**, dans ledit cas $\varepsilon < R < Q$, l'équipement d'accès (21) possède en outre des moyens pour prescrire au terminal (10, 11) une période de rafraîchissement d'enregistrement $S = R + P - Q$.

11. Système de gestion de la signalisation selon l'une quelconque des revendications 7 à 10, **caractérisé en ce que** ledit équipement d'accès (21) possède en outre des moyens pour, suite à la réception par l'équipement d'accès (21) d'une requête de rafraîchissement pour un type prédéterminé de souscription de la part dudit terminal (10, 11) :

- déterminer la durée *R'* restante pour ledit type de souscription au niveau du coeur (22) de réseau pour le terminal (10, 11) ainsi que la période de rafraîchissement effective *Q'* mise en oeuvre par le terminal (10, 11) lorsque l'équipement d'accès (21) lui a prescrit une période de rafraîchissement égale à *P',* où *P'* est la période de rafraîchissement pour ledit type de souscription prescrite au terminal par l'équipement d'accès en fonctionnement normal, et

- dans le cas où *R'≥Q',* envoyer au terminal (10, 11) une confirmation pour la souscription dudit type sans relayer ladite requête vers le coeur (22) de réseau.

**12.** Système de gestion de la signalisation selon la revendication 11, **caractérisé en ce que** l'équipement d'accès (21) possède en outre des moyens pour envoyer au terminal (10, 11) une confirmation pour ledit type de souscription sans relayer ladite requête vers le coeur (22) de réseau également dans le cas où $\varepsilon'< R'<Q'$, où $\varepsilon'$ est une durée prédéterminée positive ou nulle.

**13.** Système de gestion de la signalisation selon l'une quelconque des revendications 7 à 12, **caractérisé en ce que**, ledit réseau de télécommunications étant de type IMS, l'équipement d'accès (21) comprend un serveur P-CSCF.

**14.** Moyen de stockage de données inamovible, ou partiellement ou totalement amovible, comportant des instructions de code de programme informatique pour l'exécution des étapes d'un procédé de gestion de la signalisation selon l'une quelconque des revendications 1 à 6.

**15.** Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de gestion de la signalisation selon l'une quelconque des revendications 1 à 6, lorsqu'il est exécuté sur un ordinateur.


**Patentansprüche**

**1.** Verfahren für das Management der Signalgebung in einem Telekommunikationsnetz, wobei im Normbetrieb ein Gerät (21) für den Zugriff auf das Netz einem Endgerät (10, 11) eine Aufzeichnungsauffrischungsperiode P vorschreibt, **dadurch gekennzeichnet, dass** nach der Detektion eines den Netzkern (22) beeinflussenden Ausfalls durch das Zugriffsgerät (21) und dann nach dem Empfang einer Aufzeichnungsauffrischungsanforderung von Seiten des Endgeräts (10, 11) durch das Zugriffgerät (21) das Zugriffgerät (21):

- die auf Höhe des Netzkerns (22) für das Endgerät (10, 11) verbleibende Aufzeichnungsdauer R sowie die effektive Periode *Q* der Auffrischung, die von dem Endgerät (10, 11) ausgeführt wird, wenn das Zugriffgerät (21) ihm eine Auffrischungsperiode, die gleich P ist, vorschreibt, bestimmt und

- in dem Fall, in dem R $\geq$ Q ist, zu dem Endgerät (10, 11) eine Aufzeichnungsbestätigung schickt, ohne die Anforderung zu dem Netzkern (22) weiterzuleiten.

**2.** Signalgebungsmanagementverfahren nach Anspruch 1, **dadurch gekennzeichnet, dass** in dem Fall, in dem R $\geq$ Q ist, das Zugriffsgerät (21) dem Endgerät (10, 11) eine Aufzeichnungsauffrischungsperiode S = P vorschreibt.

**3.** Signalgebungsmanagementverfahren nach Anspruch 1 oder 2, **dadurch gekennzeichnet, dass** das Zugriffsgerät (21) zu dem Endgerät (10, 11) eine Aufzeichnungsbestätigung schickt, ohne die Anforderung zu dem Netzkern (22) weiterzuleiten, auch in dem Fall, in dem ε < R < Q, wobei ε eine positive vorgegebene Dauer oder null ist.

**4.** Signalgebungsmanagementverfahren nach Anspruch 3, **dadurch gekennzeichnet, dass** in dem Fall ε < R < *Q* das Zugriffsgerät (21) dem Endgerät (10, 11) eine Aufzeichnungsauffrischungsperiode S = R + P - *Q* vorschreibt.

**5.** Signalgebungsmanagementverfahren nach einem der Ansprüche 1 bis 4, **dadurch gekennzeichnet, dass** nach dem Empfang einer Auffrischungsanforderung für einen vorgegebenen Teilnehmertyp von Seiten des Endgeräts (10, 11) durch das Zugriffsgerät (21) das Zugriffsgerät (21) :

- die für den Teilnehmertyp auf Höhe des Netzkerns (22) für das Endgerät (10, 11) verbleibende Dauer R' sowie die effektive Periode Q' der Auffrischung, die durch das Endgerät (10, 11) ausgeführt wird, wenn das Zugriffgerät (21) ihm eine Auffrischungsperiode, die gleich P' ist, vorschreibt, wobei P' die Auffrischungsperiode für den Teilnehmertyp ist, die dem Endgerät durch das Zugriffsgerät im Normalbetrieb vorgeschrieben wird, bestimmt und

- in dem Fall, in dem R' $\geq$ Q' ist, zu dem Endgerät (10, 11) eine Bestätigung für die Teilnahme des Typs schickt, ohne die Anforderung zu dem Netzkern (22) zu schicken.

6. Signalgebungsmanagementverfahren nach Anspruch 5, **dadurch gekennzeichnet, dass** das Zugriffsgerät (21) zu dem Endgerät (10, 11) eine Bestätigung für den Teilnehmertyp schickt, ohne die Anforderung zu dem Netzkern (22) weiterzuleiten, auch in dem Fall, in dem $\varepsilon'$ < R' < Q' ist, wobei $\varepsilon'$ eine positive vorgegebene Dauer oder null ist.

7. System für das Management der Signalgebung in einem Telekommunikationsnetz, das ein Gerät (21) für den Zugriff auf das Netz umfasst, das im Normalbetrieb einem Endgerät (10, 11) eine Aufzeichnungsauffrischungsperiode P vorschreibt, **dadurch gekennzeichnet, dass** das Zugriffsgerät (21) Mittel besitzt, um nach der Detektion eines den Netzkern (22) beeinflussenden Ausfalls durch das Zugriffsgerät (21) und dann nach dem Empfang einer Aufzeichnungsauffrischungsanforderung von Seiten des Endgeräts (10, 11) durch das Zugriffsgerät (21):

- die Aufzeichnungsdauer R, die auf Höhe des Netzkerns (22) für das Endgerät (10, 11) verbleibt, sowie die effektive Periode $Q$ der Auffrischung, die durch das Endgerät (10, 11) ausgeführt wird, wenn das Zugriffsgerät (21) ihm eine Auffrischungsperiode, die gleich P ist, vorschreibt, zu bestimmen und
- in dem Fall, in dem R' $\geq$ $Q$ ist, zu dem Endgerät (10, 11) eine Aufzeichnungsbestätigung zu schicken, ohne die Anforderung zu dem Netzkern (22) weiterzuleiten.

8. Signalgebungsmanagementsystem nach Anspruch 7, **dadurch gekennzeichnet, dass** in dem Fall, in dem R' $\geq$ $Q$ ist, das Zugriffsgerät (21) außerdem Mittel besitzt, um dem Endgerät (10, 11) eine Aufzeichnungsauffrischungsperiode S = P vorzuschreiben.

9. Signalgebungsmanagementsystem nach Anspruch 7 oder Anspruch 8, **dadurch gekennzeichnet, dass** das Zugriffsgerät (21) außerdem Mittel besitzt, um zu dem Endgerät (10, 11) eine Aufzeichnungsbestätigung zu schicken, ohne die Anforderung zu dem Netzkern (22) weiterzuleiten, auch in dem Fall, in dem $\varepsilon$ < R < $Q$ ist, wobei $\varepsilon$ eine positive vorgegebene Dauer oder null ist.

10. Signalgebungsmanagementsystem nach Anspruch 9, **dadurch gekennzeichnet, dass** in dem Fall, in dem $\varepsilon$ < R < $Q$ ist, das Zugriffsgerät (21) außerdem Mittel besitzt, um dem Endgerät (10, 11) eine Aufzeichnungsauffrischungsperiode S = R + P - $Q$ vorzuschreiben.

11. Signalgebungsmanagementsystem nach einem der Ansprüche 7 bis 10, **dadurch gekennzeichnet, dass** das Zugriffsgerät (21) außerdem Mittel besitzt, um nach dem Empfang einer Auffrischungsanforderung für einen vorgegebenen Teilnehmertyp von Seiten des Endgeräts (10, 11) durch das Zugriffsgerät (21):

- die Dauer R', die für den Teilnehmertyp auf Höhe des Netzkerns (22) für das Endgerät (10, 11) verbleibt, sowie die effektive Periode Q' der Auffrischung, die von dem Endgerät (10, 11) ausgeführt wird, wenn das Zugriffsgerät (21) ihm eine Auffrischungsperiode, die gleich P' ist, vorschreibt, wobei P' die Auffrischungsperiode für den Teilnehmertyp ist, die dem Endgerät durch das Zugriffsgerät im Normalbetrieb vorgeschrieben wird, zu bestimmen und
- in dem Fall, in dem R' $\geq$ Q' ist, zu dem Endgerät (10, 11) eine Bestätigung für die Teilnahme des Typs zu schicken, ohne die Anforderung zu dem Netzkern (22) weiterzuleiten.

12. Signalgebungsmanagementsystem nach Anspruch 11, **dadurch gekennzeichnet, dass** das Zugriffsgerät (21) außerdem Mittel besitzt, um zu dem Endgerät (10, 11) eine Bestätigung für den Teilnehmertyp zu schicken, ohne die Anforderung zu dem Netzkern (22) weiterzuleiten, auch in dem Fall, in dem $\varepsilon'$ < R' < Q' ist, wobei $\varepsilon'$ eine positive vorgegebene Dauer oder null ist.

13. Signalgebungsmanagementsystem nach einem der Ansprüche 7 bis 12, **dadurch gekennzeichnet, dass** dann, wenn das Telekommunikationsnetz von IMS-Typ ist, das Zugriffsgerät (21) einen P-CSCF-Server umfasst.

14. Fest montiertes oder teilweise oder vollständig entnehmbares Datenspeichermittel, das Datenverarbeitungsprogramm-Codebefehle für die Ausführung der Schritte eines Signalgebungsmanagementverfahrens nach einem der Ansprüche 1 bis 6 enthält.

15. Computerprogramm, das von einem Kommunikationsnetz fernladbar ist und/oder auf einem durch den Computer lesbaren Träger gespeichert ist und/oder von einem Mikroprozessor ausführbar ist, **dadurch gekennzeichnet, dass** es Befehle für die Ausführung der Schritte eines Signalgebungsmanagementverfahrens nach einem der Ansprüche 1 bis 6, wenn es auf einem Computer ausgeführt wird, umfasst.

## Claims

1. Method for managing the signalling in a telecommunication network, in which, under normal operation, an item of equipment (21) for accessing said network prescribes for a terminal (10,11) a registration refresh period P, **characterized in that**, following the detection by said item of access equipment (21) of a failure affecting the network core (22) then upon the receipt by the item of access equipment (21) of a registration refresh request from said terminal (10,11), the item of access equipment (21) :

   - determines the remaining registration time period R at the level of the network core (22) for the terminal (10,11) as well as the effective refresh period $Q$ implemented by the terminal (10,11) when the item of access equipment (21) has prescribed for it a refresh period equal to P, and
   - in the case where $R \geq Q$, sends to the terminal (10,11) a registration confirmation without relaying said request to the network core (22).

2. Method for managing the signalling according to Claim 1, **characterized in that**, in said case $R \geq Q$, the item of access equipment (21) prescribes for said terminal (10,11) a registration refresh period S = $P$.

3. Method for managing the signalling according to Claim 1 or Claim 2, **characterized in that** said item of access equipment (21) sends to the terminal (10,11) a registration confirmation without relaying said request to the network core (22) also in the case where $\varepsilon < R < Q$, where $\varepsilon$ is a predetermined positive or zero time period.

4. Method for managing the signalling according to Claim 3, **characterized in that**, in said case $\varepsilon < R < Q$, the item of access equipment (21) prescribes for the terminal (10,11) a registration refresh period S = $R + P$ - Q.

5. Method for managing the signalling according to any one of Claims 1 to 4, **characterized in that**, following the receipt by the item of access equipment (21) of a refresh request for a predetermined type of subscription from said terminal (10,11), the item of access equipment (21):

   - determines the remaining time period $R'$ for said type of subscription at the level of the network core (22) for the terminal (10,11) as well as the effective refresh period $Q'$ implemented by the terminal (10,11) when the item of access equipment (21) has prescribed for it a refresh period equal to $P'$, where $P'$ is the refresh period for said type of subscription prescribed for the terminal by the item of access equipment under normal operation, and
   - in the case where $R' \geq Q'$, sends to the terminal (10,11) a confirmation for the subscription of said type without relaying said request to the network core (22).

6. Method for managing the signalling according to Claim 5, **characterized in that** the item of access equipment (21) sends to the terminal (10,11) a confirmation for said type of subscription without relaying said request to the network core (22) also in the case where $\varepsilon' < R' < Q'$, where $\varepsilon'$ is a predetermined positive or zero time period.

7. System for managing the signalling in a telecommunication network, comprising an item of equipment (21) for accessing said network which, under normal operation, prescribes for a terminal (10,11) a registration refresh period P, **characterized in that** said item of access equipment (21) possesses means for, following the detection by said item of access equipment (21) of a failure affecting the network core (22) then upon the receipt by the item of access equipment (21) of a registration refresh request from said terminal (10,11):

   - determining the remaining registration time period $R$ at the level of the network core (22) for the terminal (10,11) as well as the effective refresh period $Q$ implemented by the terminal (10,11) when the item of access equipment (21) has prescribed for it a refresh period equal to P, and
   - in the case where $R \geq Q$, sending to the terminal (10,11) a registration confirmation without relaying said request to the network core (22).

8. System for managing the signalling according to Claim 7, **characterized in that**, in said case $R \geq Q$, the item of access equipment (21) furthermore possesses means for prescribing for said terminal (10,11) a registration refresh period S = *P.*

9. System for managing the signalling according to Claim 7 or Claim 8, **characterized in that** said item of access equipment (21) furthermore possesses means for sending to the terminal (10,11) a registration confirmation without relaying said request to the network core (22) also in the case where $\varepsilon < R < Q$, where $\varepsilon$ is a predetermined positive or zero time period.

10. System for managing the signalling according to Claim 9, **characterized in that**, in said case $\varepsilon < R < Q$, the item of access equipment (21) furthermore possesses means for prescribing for the terminal (10,11) a registration refresh period $S = R + P - Q$.

11. System for managing the signalling according to any one of Claims 7 to 10, **characterized in that** said item of access equipment (21) furthermore possesses means for, following the receipt by the item of access equipment (21) of a refresh request for a predetermined type of subscription from said terminal (10,11):

   - determining the remaining time period $R'$ for said type of subscription at the level of the network core (22) for the terminal (10,11) as well as the effective refresh period $Q'$ implemented by the terminal (10,11) when the item of access equipment (21) has prescribed for it a refresh period equal to $P'$, where $P'$ is the refresh period for said type of subscription prescribed for the terminal by the item of access equipment under normal operation, and
   - in the case where $R' \geq Q'$, sending to the terminal (10,11) a confirmation for the subscription of said type without relaying said request to the network core (22).

12. System for managing the signalling according to Claim 11, **characterized in that** the item of access equipment (21) furthermore possesses means for sending to the terminal (10,11) a confirmation for said type of subscription without relaying said request to the network core (22) also in the case where $\varepsilon' < R' < Q'$, where $\varepsilon'$ is a predetermined positive or zero time period.

13. System for managing the signalling according to any one of Claims 7 to 12, **characterized in that**, said telecommunication network being of IMS type, the item of access equipment (21) comprises a P-CSCF server.

14. Non-removable, or partly or totally removable means for storing data, including computer program code instructions for executing the steps of a method for managing the signalling according to any one of Claims 1 to 6.

15. Computer program downloadable from a communication network and/or stored on a medium readable by computer and/or executable by a microprocessor, **characterized in that** it comprises instructions for executing the steps of a method for managing the signalling according to any one of Claims 1 to 6, when it is executed on a computer.

**FIG. 1**

**TERMINAL**  **ACCES**  **COEUR**

REGISTER  REGISTER

$t_0$  200 OK (1450s = P)  200 OK (3600sec)

REGISTER

$t_0 + 850$ s  200 OK (1450s = P)

$t_0 + 1293$ s  **Détection de panne**

$t_0 + 1700$ s  REGISTER

200 OK (1450s = P)

REGISTER

$t_0 + 2550$ s  200 OK (1450s = P)

REGISTER

$t_0 + 3400$ s  200 OK (800s = R + (P-Q))

$t_0 + 3600$ s  REGISTER  REGISTER

**FIG. 2**

**EP 2 396 950 B1**

## RÉFÉRENCES CITÉES DANS LA DESCRIPTION

**Documents brevets cités dans la description**

- US 2008182575 A1